Europäisches Patentamt

European Patent Office

Office européen des brevets

(11) Veröffentlichungsnummer: **0 256 211**
A2

## (12) EUROPÄISCHE PATENTANMELDUNG

(21) Anmeldenummer: **87105690.9**

(22) Anmeldetag: **16.04.87**

(51) Int. Cl.³: **B 29 C 45/17**
**B 29 C 45/07**

(30) Priorität: **04.08.86 DE 3626345**

(43) Veröffentlichungstag der Anmeldung:
**24.02.88 Patentblatt 88/8**

(84) Benannte Vertragsstaaten:
**AT CH DE FR GB IT LI NL**

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich, Dr.**
**Patentanwälte Dr. Mayer & Frank Westliche 24**
**D-7530 Pforzheim(DE)**

(54) **Stützeinrichtung am Plastifizierzylinder einer Kunststoff-Spritzgiess-Einheit.**

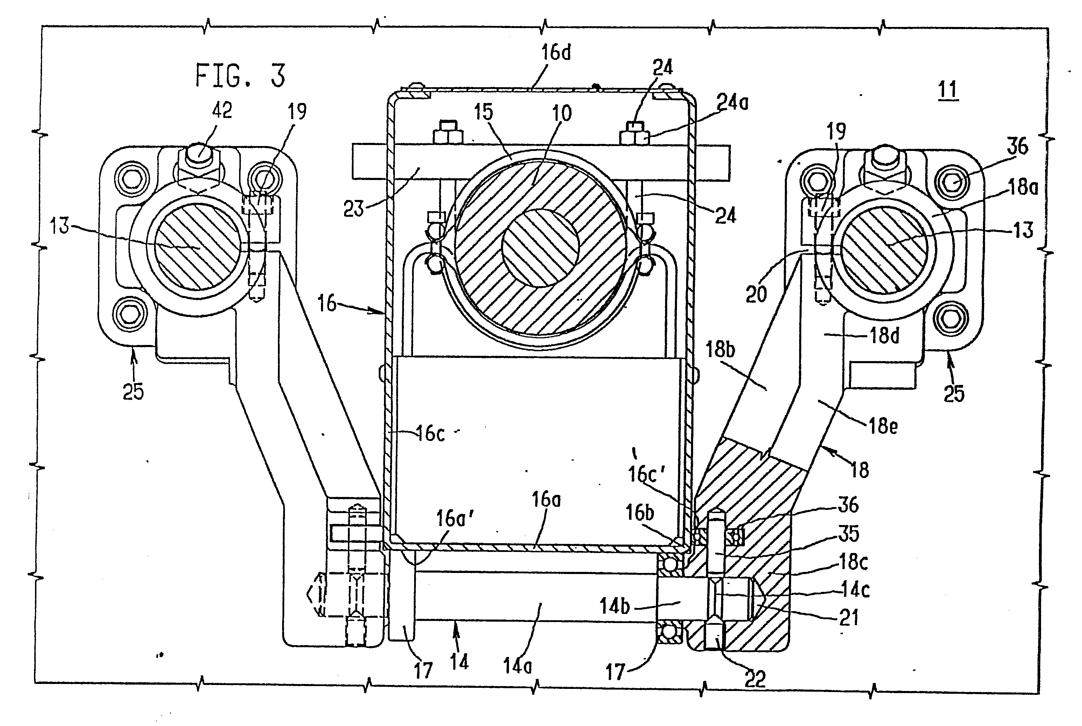

(57) An zwei stationären, in Höhe der Spritzachse der Kunststoff-Spritzgießeinheit verlaufenden und deren Führung dienenden Säulen (13) sind zwei etwa vertikal verlaufende Tragarme (18) axial unbeweglich verspannt. Tragarme (18) sind unten über eine im Abstand vom Plastifizierzylinder (10) verlaufende Horizontalachse (14) miteinander verbunden. Der Plastifizierzylinder (10) ist von einem U-Profil (16) umschlossen und mit diesem starr verbunden. Ein horizontaler Steg (16a) des U-Profils (16) bildet Rollbahnen (16a') für Laufrollen (17), die auf der Horizontalachse (14) sitzen. Bei einer solchen Ausbildung können die betriebsbedingten periodischen Axialbewegungen des Plastifizierzylinders (10) bei bedienungsfreier, exakter Zentrierung auf die Spritzachse durch bloßes Auflegen auf den Stützorganen der Stützeinrichtung nahezu reibungsfrei erfolgen. Zudem ist es möglich, den Plastifizierzylinder ohne manuelle Eingriffe an der Stützeinrichtung zu einem Abtransport nach oben abzuheben (Fig. 3).

EP 0 256 211 A2

./...

FIG. 3

Stützeinrichtung am Plastifizierzylinder einer Kunststoff-Spritz-gießmaschine.

Die Erfindung bezieht sich auf eine Stützeinrichtung entsprechend dem Oberbegriff des Patentanspruches 1.

Bei einer bekannten Stützeinrichtung dieser Art (DE-AS 29 07 557) ist der Plastifizierzylinder von einem zweiteiligen konzentrischen Ring umschlossen und in diesem mittels Zentrierstiften auf die Spritzachse zentrierbar. Der Ring selbst ist mittels Gleitlager auf den Säulen abgestützt. Eine Lösung des Plastifizierzylinders von den Säulen ist erst nach Demontage des Ringes möglich.

Es ist auch eine zentrierende Abstützung des Plastifizierzylinders an einem kalottenförmigen Gleitlager innerhalb der Durchtrittsöffnung des Formträgers bekannt. Diese Abstützung ist jedoch nur wirksam, wenn der Plastifizierzylinder auf die Spritzgießform aufgesetzt ist. Beim periodischen Absetzen des Plastifizierzylinders von der Spritzgießform wird dieser infolge eines periodischen Durchhängens rhythmisch auf Biegung beansprucht (US-PS 3,427,639).

Eine Abstützung des Plastifizierzylinders auf einer am stationären Formträger befestigten horizontalen Plattform zum Zwecke einer Verschwenkung in einer horizontalen Ebene um eine vertikale Achse ist ebenfalls bekannt (DE-OS 1 554 768).

Der Erfindung liegt die Aufgabe zugrunde, eine Stützeinrichtung der eingangs genannten Art für einen computergesteuerten Wechsel des Plastifizierzylinders derart weiterzubilden, daß die betriebsbedingten periodischen Axialbewegungen des Plastifizierzylinders bei bedienungsfreier, exakter Zentrierung auf die Spritzachse durch bloßes Aufliegen auf den Stützorganen nahezu reibungsfrei erfolgen können und der Plastifizierzylinder dadurch nach Abkuppeln von seinen Antriebsaggregaten ohne manuelle Eingriffe an der Stützeinrichtung zu einem Abtransport nach oben abgehoben werden kann.

Diese Aufgabe wird durch die im Patentanspruch 1 genannten Merkmale gelöst.

Bei einer solchen Ausbildung ist eine exakte Zentrierung des Plastifizierzylinders auf die Spritzachse dadurch gewährleistet, daß seine Last über die in den Schenkeln des U-Profils abgestützten Träger, über die genannten Schenkel, über die Horizontalachse und die Tragarme in Säulen eingeleitet werden kann, welche ihrerseits, wie die Spritzgießform am stationären Formträger zentriert sind. Insofern besteht zwischen den aufeinander zu zentrierenden Objekten, nämlich zwischen der Spritzgießform und dem Plastifizierzylinder zwar ein vielgestaltiges, jedoch absolut starres und extrem stabiles Verbindungssystem. Spritzgießform und Plastifizierzylinder sind am gleichen Objekt (stationärer Formträger) auf die Spritzachse zentriert. Nachstehend wird die Erfindung anhand der Zeichnung an einem Ausführungsbeispiel erläutert.

Es zeigen:

Fig. 1          Einen Ausschnitt aus der Spritzgießmaschine im
                Bereich der Stützeinrichtung in Draufsicht,

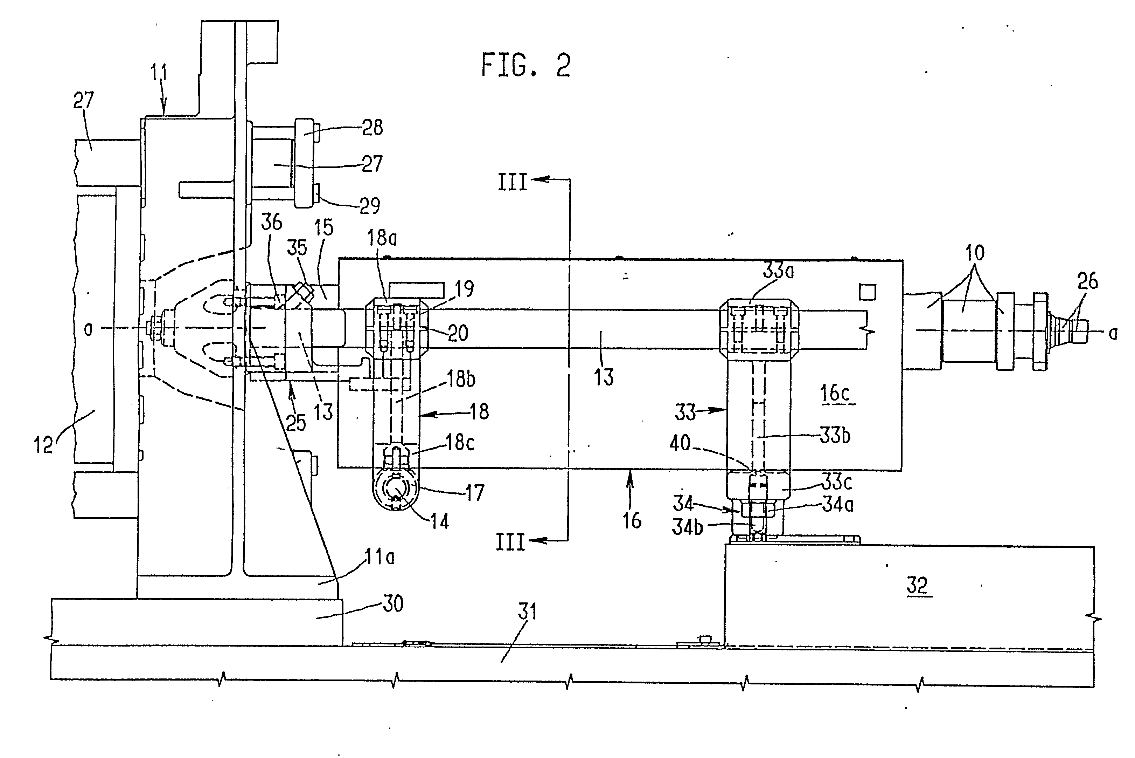

Fig. 2          den Ausschnitt gemäß Fig. 1 nach Abkupplung des
                Plastifizierzylinders von seinen Antriebsaggregaten
                in Seitenansicht und

Fig. 3          einen Schnitt nach Linie III-III von Fig. 2.

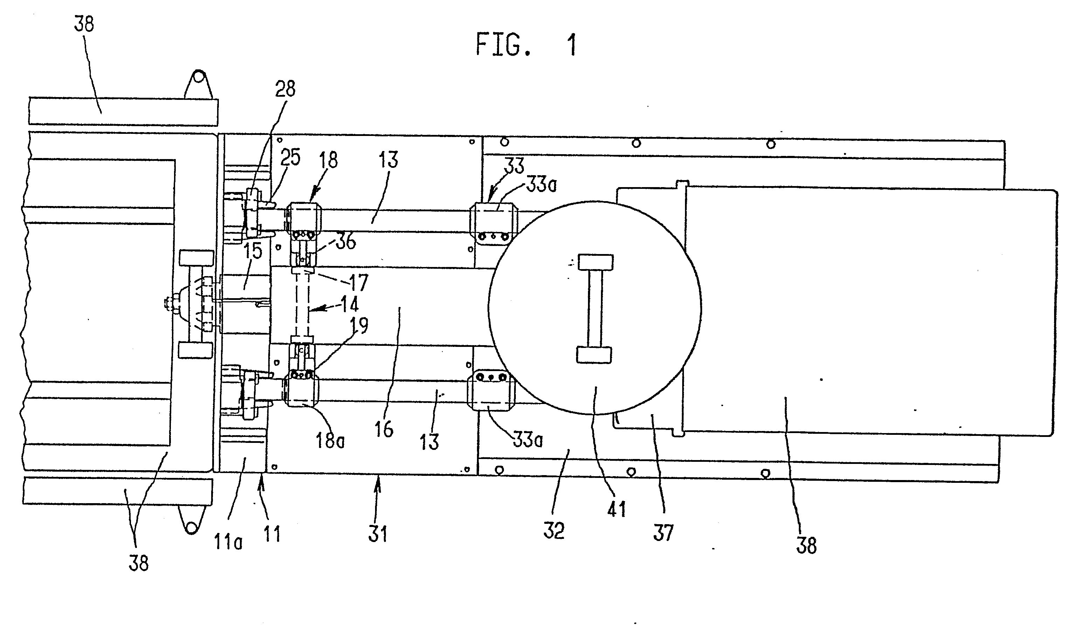

Die horizontale und quer zur Trennfuge einer Spritzgießform arbeitende Kunststoff-Spritzgießeinheit ist Bestandteil einer Kunststoff-Spritzgießmaschine mit horizontaler Formschließeinheit. Der bewegbare Formträger der Formschließeinheit ist auf Führungsschienen 30 des Maschinenfußes 31 abgestützt und zusätzlich an Säulen 27 geführt. Der stationäre Formträger 11 ist über Lagerorgane 11a mit den Führungsschienen 30 fest verbunden. Die Kunststoff-Spritzgießeinheit ist auf die zwischen den Formträgern der Formschließeinheit festgespannte Spritzgießform 12 mittels wenigstens eines Hydraulikzylinders periodisch aufsetzbar. Dabei ist sie an zwei stationären Säulen 13 geführt, die am stationären Formträgers 11 formschlüssig festgelegt sind. Die Säulen 13 liegen mit der Spritzachse a-a in einer gemeinsamen horizontalen Ebene. Die Kunststoff-Spritzgießeinheit umfaßt einen auf den Säulen 13 axial führbaren Trägerblock 37, der das rückwärtige Ende des Plastifizierzylinders 10 in einer zentralen Bohrung formschlüssig aufnimmt und der eine Kupplungseinrichtung zum Ankuppeln des Plastifizierzylinders an den Trägerblock 37 enthält. An den Trägerblock 37 sind die in Fig. 1 durch eine Abdeckung 38 abgeschirmten Antriebsaggregate für die Kunststoff-Spritzgießeinheit als ganzes, für den axialen Einspritzhub der im Plastifizierzylinder befindlichen Förderschnecke 26 und für deren Rotation angeschlossen. Aus einem Vorratsbehälter 41 kann das Kunststoffmaterial über einen Rieselkanal im Trägerblock 37 in den Plastifizierzylinder 10 gelangen. Die Säulen 13 sind etwa mittig über einen Stützbügel 33 über ein Podest 32 auf dem Maschinenfuß 31 abgestützt. Der Stützbügel weist schellenartige Muffen 33a auf, mit welchen die Säulen 13 verspannt sind. Die Muffen 33a gehen über vertikale Schenkel 33b in einen horizontalen Steg 33c über, der über eine Stelleinrichtung 34 zur Höhenverstellung des Stützbügels 33 auf einem Podest 32 des Maschinenfußes 31 abgestützt ist. Die Stelleinrichtung 34 umfaßt zwei symmetrisch zur Spritzachse a-a angeordnete, als Stützsäulen dienende Gewindebolzen, die je mit einem Innengewinde des Steges 33c im Eingriff stehen. Die jeweilige Höheneinstellung ist durch eine Kontermutter 34a gesichert. Die rückwärtigen Abschnitte der Säulen 13 sind durch eine Abstützung der Antriebsaggregate entlastet.

Der Plastifizierzylinder 10 ist samt seiner Widerstandsheizung
15 von einem U-Profil 16 aus kaltverformtem Stahlblech mit Spiel
umschlossen. Mit diesem U-Profil 16 ist der Plastifizierzylinder
10 über horizontale, stegartige Träger 23 starr verbunden. Diese
sind in vertikalen Schenkeln 16c des U-Profils abgestützt. Mit
den Trägern 23 ist der Plastifizierzylinder 10 mittels U-förmiger
Spannbügel 24 verspannt. Die freien Enden dieser Spannbügel 24
durchsetzen die zugehörigen Träger 23 und stehen je mit einer
Spannmutter 24a im Eingriff, wie insbesondere aus Fig. 3 ersichtlich. Die vertikalen Schenkel 16c des U-Profils gehen über Biegekanten 16b in einen horizontalen Steg 16a über. Der Abstand dieses
Steges 16a von den Trägern 23 entspricht etwa dem doppelten Durchmesser des Plastifizierzylinders 10. Das U-Profil 16 ist oben
mittels einer Deckplatte 16d zu einem Viereckrohr ergänzt.

Die den Plastifizierzylinder 10 mit Heizwendeln 15 und das U-Profil
16 umfassende Plastifiziereinheit ist nach Abkupplung von ihren
Antriebsaggregaten in einem hinter ihrem Schwerpunkt liegenden
axialen Bereich nach Abkupplung auf dem Steg 33c abstützbar. In
einem vor dem Schwerpunkt liegenden axialen Bereich ist die Plastifiziereinheit sowohl während des Spritzbetriebes, als auch nach
Abkupplung von der Stützeinrichtung abgestützt. Diese Stützeinrichtung umfaßt zwei Tragarme 18, die je oben mit der benachbarten
Säule 13 axial unbeweglich verspannt sind. Zu diesem Zweck sind
die Tragarme 18 am oberen Ende je als eine von der zugehörigen
Säule 13 durchsetzte, mit einem horizontalen Radialspalt 20 versehene schellenartige Muffe 18a ausgebildet. Diese ist mittels
Spannbolzen 19 mit der umschlossenen Säule 13 verspannbar. Unten
sind die beiden Tragarme 18 über eine im Abstand vom Steg 16a
verlaufende Horizontalachse 14 miteinander verbunden. Die als
stationäre Lagerachse dienende Horizontalachse 14 ist in Sacklochbohrungen 21 der Tragarme 18 aufgenommen. Sie ist ferner mit Hilfe
von Radialschrauben 22 axial gesichert, die in Ringnuten 14c der

Horizontalachse 14 eingreifen. Die Muffe 18a jedes Tragarmes 18 ist an einen oberen vertikalen Abschnitt 18d angeformt, der über einen zur Spritzachse a-a hin geneigten Mittelabschnitt 18e in einen unteren Lagerabschnitt 18c übergeht, wobei eine sich zwischen den beiden vertikalen Abschnitten 18d und 18c erstreckende Versteifungsrippe 18b vorgesehen ist. Der horizontale Steg 16a des U-Profils 16 bildet zwei entlang der Biegekanten 16b verlaufende Rollbahnen 16a'. Auf diesen Rollbahnen sind Laufrollen 17 abrollbar, die auf der Horizontalachse 14 sitzen. In den Lagerabschnitten 18c der Tragarme 18 sind weitere auf vertikalen Achsen 35 gelagerte Laufrollen 36 vorgesehen. Deren Laufflächen liegen je an einem Schenkel 16c des U-Profils 16 an. Dadurch ist auch eine Führung sowie eine Abstützung gegen seitlich an der Plastifiziereinheit angreifende Stoß- und Druckbeanspruchungen gewährleistet. Dabei sind diese Laufrollen 36 je auf einer vertikalen Rollbahn des benachbarten Schenkels 16c des U-Profils 16 abrollbar, die unten von der benachbarten Biegekante 16b begrenzt und dadurch versteift ist. Beide Rollbahnen 16a' und 16c' erstrecken sich über den vorderen axialen Endabschnitt des U-Profils 16, das sich seinerseits über einen axialen Mittelabschnitt des Plastifizierzylinders 10 erstreckt. Dieser Mittelabschnitt ist etwa halb so lang wie der Plastifizierzylinder 10.

Bei einem Wechsel der Plastifiziereinheit wird nach Beendigung des Spritzbetriebes die Plastifiziereinheit zunächst dadurch axial festgelegt, daß ein am Steg 33c des Stützbügels 33 vertikal verschiebbarer Arretierbolzen 40 in ein Arretierloch des Steges 16a hydraulisch einsteuerbar ist. Nach Abkupplung des Plastifizierzylinders vom Trägerblock 37 kann der Trägerblock mit den zugehörigen Antriebsaggregaten mit Hilfe des die Spritzgießeinheit bei Spritzbetrieb auf die Spritzgießform aufsteuernden Hydraulikzylinders von der Plastifiziereinheit durch einen Rückhub abgezogen werden, wobei sich die Plastifiziereinheit unter Abstützung auf den Steg 33c auflegt. Danach kann die Plastifiziereinheit für den Abtransport, gegebenenfalls unter Kippen um eine horizontale, quer zur Spritzachse a-a verlaufende Kippachse nach oben abgehoben werden.

Zur Festlegung der Säulen 13 am stationären Formträger 12 dienen Anschlußstücke 25, die stirnseitig mittels Schrauben 36 mit dem Formträger 11 verbunden sind und rückseitig die Säulen 13 in Bohrungen formschlüssig aufnehmen. In den Bohrungen sind die Säulen mittels Sperrschrauben 42 axial gesichert.

Die Laufrollen 17 liegen je einerseits am Lagerteil 18c und andererseits an einer Ringschulter der Horizontalachse 14 an. Die Ringschulter ist am Übergang eines Mittelabschnittes 14a der Horizontalachse 14 in einen Endabschnitt 14b geringeren Durchmessers gebildet.

0256211

Karl Hehl, Arthur-Hehl-Str. 32, D-7298 Loßburg 1

Stützeinrichtung am Plastifizierzylinder einer Kunststoff-Spritzgießeinheit.

P a t e n t a n s p r ü c h e

1. Stützeinrichtung an dem mit einer Widerstandsheizung versehenen Plastifizierzylinder einer Kunststoff-Spritzgießeinheit, die auf eine zwischen Formträgern einer Formschließeinheit festgespannte Spritzgießform periodisch aufsetzbar und bei den Aufsetzbewegungen an zwei stationären Säulen geführt ist, die in Bohrungen des stationären Formträgers formschlüssig festgelegt sind und deren Achsen mit der Spritzachse in einer gemeinsamen horizontalen Ebene liegen,
mit zwei von den Säulen formschlüssig gehalterten Tragelementen, an welchen der sich axial bewegende Plastifizierzylinder abgestützt ist,
dadurch gekennzeichnet, daß die beiden als vertikale Tragarme (18) ausgebildeten Tragelemente oben je in der benachbarten Säule (13) axial unbeweglich verspannt und unten über eine im Abstand vom Plastifizierzylinder (10) verlaufende Horizontalachse (14) miteinander verbunden sind,
daß der Plastifizierzylinder (10) samt Widerstandsheizung (15) von einem U-Profil (16) aus kaltverformtem Stahlblech mit Spiel umschlossen und mit diesem U-Profil (16) über Träger (23) starr verbunden ist, die in vertikalen Schenkeln (16c) des U-Profils abgestützt sind,
und daß der horizontale Steg (16a) des U-Profils (16) Rollbahnen (16a') für Laufrollen (17) bildet, die auf der Horizontalachse (14) sitzen.

2. Stützeinrichtung nach Patentanspruch 1, dadurch gekennzeichnet, daß die Rollbahnen (16a) entlang der Biegekanten (16b) verlaufen, über welche der Steg (16a) in die vertikalen Schenkel (16c) des zu einem Viereckrohr geschlossenen Rohrprofils (16) übergehen.

3. Stützeinrichtung nach Patentanspruch 1 oder 2, dadurch gekennzeichnet, daß die Tragarme (18) am oberen Ende je als eine von der zugehörigen Säule (13) durchsetzte, mit einem horizontalen Radialspalt (20) versehene schellenartige Muffe (18a) ausgebildet sind, die mittels Spannbolzen (19) mit der Säule (13) verspannbar ist.

4. Stützeinrichtung nach einem der Patentansprüche 1 bis 3, dadurch gekennzeichnet, daß, die als stationäre Lagerachse dienende Horizontalachse (14) in Sacklochbohrungen (21) der Tragarme (18) aufgenommen und mit Hilfe von Radialschrauben (22) axial gesichert ist, die in Ringnuten (14c) der Horizontalachse (14) eingreifen.

5. Stützeinrichtung nach einem der vorhergehenden Patentansprüche, dadurch gekennzeichnet, daß der Abstand des Steges (16a) vom Träger (23) etwa dem doppelten Durchmesser des Plastifizierzylinders (10) entspricht.

6. Stützeinrichtung nach einem der vorhergehenden Patentansprüche, dadurch gekennzeichnet, daß in den Tragarmen (18) weitere auf vertikalen Achsen (35) gelagerte Laufrollen (36) vorgesehen sind, deren Laufflächen je an einem Schenkel (16c) des U-Profils (16) anliegen.

7. Stützeinrichtung nach Patentanspruch 6, dadurch gekennzeichnet, daß die Laufrollen (36) je auf einer vertikalen Rollbahn des benachbarten Schenkels (16c) des U-Profils (16) abrollbar sind, welche Rollbahn (16c') unten von der zwischen dem Steg (16a) und dem Schenkel (16c) gebildeten Biegekante begrenzt ist.

8. Stützeinrichtung nach einem der vorhergehenden Patentansprüche, dadurch gekennzeichnet, daß das U-Profil sich über einen axialen Mittelabschnitt des Plastifizierzylinders (10) erstreckt, der etwa halb so lang ist, wie der Plastifizierzylinder (10).

9. Stützeinrichtung nach Patentanspruch 7 oder 8, dadurch gekennzeichnet, daß sich die Rollbahnen (16a';16c') über den vorderen axialen Endabschnitt des U-Profils (16) erstrecken.

10. Stützeinrichtung nach einem der vorhergehenden Patentansprüche, dadurch gekennzeichnet, daß die Träger (23) die Schenkel (16c) beidseits nach außen überragen und daß der an den Trägern (23) unten tangential anliegende Plastifizierzylinder (10) mittels U-förmiger Spannbügel (24) mit den Trägern (23) verspannt ist.

11. Stützeinrichtung nach einem der vorhergehenden Patentansprüche, dadurch gekennzeichnet, daß der zwecks Wechsel von seinen Antriebsaggregaten abgekuppelte Plastifizierzylinder (10) axial unbeweglich über den Steg (16a) in einem axialen Abschnitt vor seinem Schwerpunkt von den Laufrollen (17) und in einem axialen Abschnitt hinter seinem Schwerpunkt vom Steg eines die Säulen (13) abstützenden, stationären U-Stützbügels aufliegt, der auf dem Maschinenfuß abgestützt ist.

12. Stützeinrichtung nach Patentanspruch 11, dadurch gekennzeichnet, daß ein im Steg (33c) des Stützbügels (33) vertikal verschiebbarer Arretierbolzen (40) hydraulisch in eine Arretierbohrung des Steges (16a) einsteuerbar ist.

# FIG. 1

FIG. 2

FIG. 3

0256211